# EUROPÄISCHE PATENTSCHRIFT

(11) **EP 0 720 399 B1**
(45) Veröffentlichungstag und Bekanntmachung des Hinweises auf die Patenterteilung: **05.11.2003**
(21) Anmeldenummer: 95119504.9
(22) Anmeldetag: 11.12.1995
(51) Int. Cl.: H04Q 7/22, H04Q 7/32

(54) **Verfahren zur Steuerung der Betriebsweise von einem programmgesteuerten Kommunikationssystem zugeordneten Mobilendgeräten**
Method for controlling the operating mode of a program-controlled communication system associated mobile terminal
Méthode de commande du mode de fonctionnement d'un appareil mobile associé à un système de communication à commande programmée

(30) Priorität: 27.12.1994 DE 4446809
(43) Veröffentlichungstag der Anmeldung: 03.07.1996
(73) Patentinhaber: SIEMENS AKTIENGESELLSCHAFT, 80333 München (DE)
(72) Erfinder: Arbenz, Dietrich, Dipl.-Ing., D-81479 München (DE)

(56) Entgegenhaltungen:
- WO-A-92/14330
- DE-A- 4 124 711

## Beschreibung

Die Erfindung betrifft ein Verfahren zur Steuerung der Betriebsweise von Mobilendgeräten die zum Teilnehmerfeld eines an ein programmgesteuertes Kommunikationssystem angeschlossenen und durch eine Funkservereinheit realisierten drahtlosen Übertragungssystem gehören, wobei das Kommunikationssystem ein die Vermittlung, Signalisierung und die Leistungsmerkmale steuerndes Mikroprozessersystem aufweist, das durch einen es repräsentierenden Mikroprozessor und durch unter anderem anschluß- und geratebezogene Informationen speichernden Speichereinheiten gebildet ist. Derartige Kommunikationssysteme, insbesondere private Telekommunikationssysteme (Nebenstellenanlagen) sind neben der erforderlichen Vermittlungssteuerung auch zu einer Steuerung bzw. Realisierung zusätzlicher, über den eigentlichen Vermittlungsvorgang hinausgehender Steuervorgänge befähigt. Solche zusätzlichen Funktionen werden im allgemeinen als Leistungsmerkmale bezeichnet, wobei insbesondere für den Kommunikationsdienst "Sprache" eine große Anzahl unterschiedlicher Leistungsmerkmale bekannt ist. Die Möglichkeit der Anrufumleitung oder die automatische Rufweiterschaltung verschaffen dem Benutzer ein bestimmtes Maß an Mobilität, da die für das eigene Endgerät bestimmten Anruf zum jeweils aktuellen Standort weitergeleitet werden. Um eine erhöhte Mobilität zu ermöglichen ist es bekannt an das betreffende Kommunikationssystem Mobilendgeräte anzuschließen. Die Kommunikation wird dabei über den Funkweg ermöglicht. Dies erfolgt über mindestens eine Funkservereinheit (Basisstation), deren anlagenseitiger Anschluß hinsichtlich der verwendeten Hardware-Komponenten in der Regel auf den übrigen Teilnehmeranschlußmodulen basiert. Mit einer derartigen mobilen Anwendung wird unter anderem eine Verringerung der Anzahl nicht entgegengenommener Anrufe und eine Verbesserung der Verfügbarkeit bzw. Erreichbarkeit erzielt. In der Funk-Servereinheit, die über ein entsprechendes Interface an das Kommunikationssystem angeschlossen ist werden die für die Kommunikation mit den mobilen Endgeräten erforderlichen Prozeduren und Protokolle abgewickelt. Sie hat Zugriff auf eine Mehrzahl von mobilen Endgeräten. In dieser Funk-Servereinheit erfolgt also die Organisation von Steuerungsdaten einschließlich des Speicherns und Verwaltens derselben. Die Zuordnung der Mobilendgeräte (Funktelefone) zur Funk-Servereinheit erfolgt über Verbindungskanäle, auf denen Nutz- bzw. Signalisierungsund Steuerungsdaten bidirektional übertragbar sind. Dies kann beispielsweise auf der Grundlage der DECT-Vereinbarung (Digital European Cordless Telecommunication) erfolgen.

Beispielsweise ist aus der internationalen Offenlegungsschrift WO 92 14330 A ein Verfahren und ein System bekannt, bei dem ein mobiler Teilnehmer an seinem Mobilgerät über eine für ihn in einem sogenannten "audio message server' gespeicherte Sprachnachricht informiert wird. Hierfür übermittelt der "audio message server" über einen sogenannten "short message service" eine die gespeicherte Sprachnachricht anzeigende Information an das Mobilgerät.

Der vorliegenden Erfindung liegt die Aufgabe zugrunde, bei dem in der geschilderten Weise erfolgenden Einsatz von Mobilendgeräten ein alternatives Verfahren für eine Information eines mobilen Teilnehmers über für ihn vorliegende Informationen anzugeben.

Diese Aufgabe wird durch die im kennzeichnenden Teil des Patentanspruches 1 angegebenen Merkmale gelöst. Es werden demnach erfindungsgemäß in bestimmten funkspezifischen Nichterreichbarkeitszuständen spezielle Informationen abgespeichert, falls in diesen Zustand ein Verbindungsversuch zu diesen betreffenden Mobilendgerät erfolgt. Ein solcher Verbindungsversuch d.h. der Suchvorgang nach dem Mobilendgerät ist z.B. immer dann erfolglos wenn sich das betreffende Mobilendgerät außerhalb des räumlichen Erreichbarkeitsgebietes befindet, oder wenn ein Gespräch durch Verlassen des Funkbereiches unterbrochen wird. Die Nichterreichbarkeit ist z.B. auch dann gegeben, wenn der Betriebsschalter des Mobilendgerätes in "Aus-Stellung" liegt oder wenn über die eingesetzten Batterien die Stromversorgung des Mobilendgerätes nicht mehr sichergestellt werden kann. In dem Zustand der Nichterreichbarkeit wird teilnehmerbezogen beispielsweise in einem Arbeitsspeicherbereich der Systemsteuerung des Kommunikationssystems oder in der zugeordneten Funk-Servereinheit eine Information über die Identität des Anrufers und über vom Anrufer vollzogene Handlungen bzw. beanspruchte Leistungsmerkmale abgespeichert. Eine derartige abgespeicherte Statusmeldung betrifft z.B. eine jeweils von ihm vollzogene gesprächsübergreifende vermittlungstechnische Eingabe, deren Wirkung also über die Dauer des betreffenden Verbindungsversuches hinaus erhalten bleibt. Ein Beispiel hierfür ist die Inanspruchnahme eines Sprachspeichersystems (Voice-Mail) durch den erfolglos rufenden Teilnehmer. Grundsätzlich werden bei Nichterreichbarkeit des gerufenen Teilnehmers die zwischen dem rufenden und dem gerufenen Endgerät notwendigen Systemmeldungen nicht unmittelbar ausgetauscht sondern zunächst auch zwischengespeichert. Ist die Erreichbarkeit des betreffenden Funkteilnehmers wieder gegeben, so werden die zwischenzeitlich gespeicherten Informationen ausgewertet und dem betreffenden Funkteilnehmer in geeigneter Form übermittelt. Dies kann durch das Zusammenspiel von Funk-Servereinheit und Kommunikationssystem oder auch ausschließlich durch die Funk-Servereinheit veranlaßt werden. Aufgrund der als Statusmeldungen abgespeicherten Informationen wird der Funkteilnehmer über die Identität des vergeblich rufenden Teilnehmers und über die von ihm durchgeführten Handlungen vermittlungstechnischer Art informiert. Diese abgespeicherten Informationen können auch kurze vom rufenden Teilnehmer eingegebene Botschaften betreffen.

Zu dem Zeitpunkt, zu dem ein Mobilendgerät erstmals wieder erreichbar ist, wird ein entsprechendes mobilendgeräteindividuelles Verfügbarkeitssignal an die zuständige Funk-Servereinheit ausgesendet. Zum nächstmöglichen Zeitpunkt wird daraufhin die Übermittlung der gespeicherten Statusmeldungen veranlaßt. Der Inhalt dieser Meldungen kann am Mobilendgerät in unterschiedlicher Weise ausgegeben werden. Neben der Anzeige auf dem zugehörigen Display ist auch eine akkustische Ansage denkbar. Durch die erfindungsgemäßen Maßnahmen werden die negativen Auswirkungen von Nichterreichbarkeitszuständen, die bei Mobilendgeräten weitaus häufiger vorhanden sind als bei drahtgebundenen Endgeräten, minimiert.

Weitere vorteilhafte Ausgestaltungen der Erfindung sind den restlichen Unteransprüchen zu entnehmen.

Die Erfindung wird im folgenden anhand eines schematisch dargestellten Ausführungsbeispiels näher erläutert.

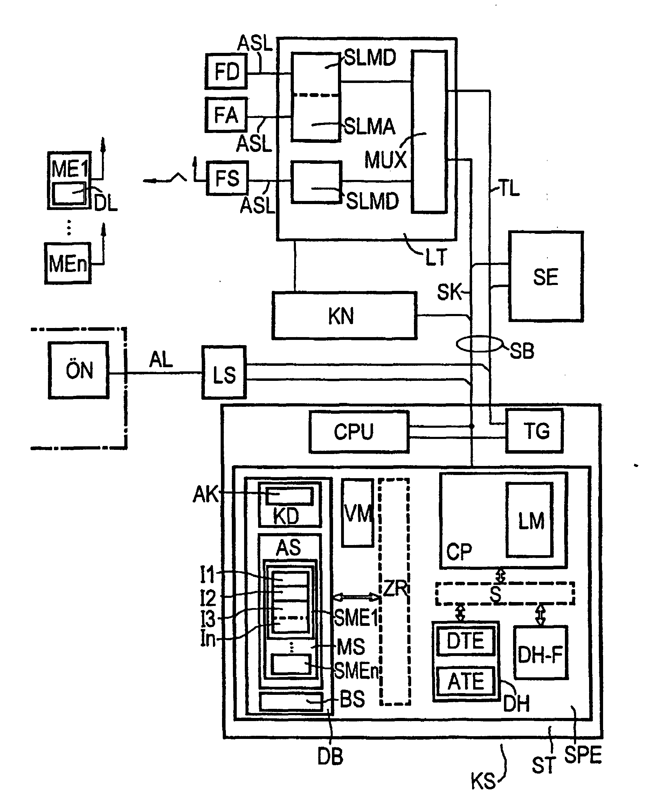

Zentraler Bestandteil der in der Figur als schematische Blockdarstellung gezeigten privaten Kommunikationssystem (Nebenstellenanlage) KS ist das Koppelnetz KN, über das Endgeräte - von denen die Fernsprechendgeräte FD bzw. FA schematisch angedeutet sind - miteinander bzw. mit zu einer öffentlichen Vermittlungsanlage ÖN führenden Leitung AL verbindbar sind. Weiterhin ist mindestens eine Funk-Servereinheit FS anschließbar, die eine drahtlose Kommunikation unter Einbeziehung der Mobilendgeräte ME1...MEn ermöglicht.

Das Koppelnetz KN steht unter dem Steuereinfluß einer zentralen Steuerung ST, die neben dem zentralen Prozessor CPU eine Speichereinrichtung SPE und eine Takteinheit TG enthält. Der zentrale Prozessor CPU steuert sämtliche Vermittlungsvorgänge und besorgt eine Aufbereitung und Zuteilung der Steuerdaten. Diese Aufgaben können auch auf mehrere Prozessoren aufgeteilt werden. Im Kommunikationssystem KS sind Leitungsanschlußeinrichtungen angeordnet. Stellvertretend ist eine Leitungsanschlußeinrichtung LT angedeutet. Diese Leitungsanschlußeinrichtungen enthalten Teilnehmeranschlußmodule SLM, die über Teilnehmeranschlußleitungen ASL jeweils mit den Kommunikationsendgeräten bzw. mit einer Funk-Servereinheit FS verbunden sind. Es können prinzipiell zwei unterschiedliche Teilnehmeranschlußmodule vorgesehen sein. Anschlußmodule SLMD dienen für den Anschluß digitaler Kommunikationsendgeräte FD und Teilnehmeranschlußmodule SLMA für den Anschluß analoger Kommunikationsendgeräte FA. Das Teilnehmeranschlußmodul SLMA für analoge Kommunikationsendgeräte stellt das Bindeglied zwischen diesen analogen Endgeräten, z.B. Fernsprechendgeräte FA und dem Kommunikationssystem KS, dar. Dieses Teilnehmeranschlußmodul enthält beispielsweise Einrichtungen für den Anschluß einer vorgegebenen Anzahl von Teilnehmeranschlußleitungen ASL. Jedes Teilnehmeranschlußmodul ist mit den notwendigen Speise-, Ruf- und Indikationsschaltungen sowie mit Zweidraht-Vierdraht-Wandlern und bei einer anlageninternen digitalen Sprachverarbeitung mit Analog-/Digital- bzw. Digitale/Analog-Wandlern für die Sprachinformationsumsetzung ausgestattet. Die digitalen bzw. digitalisierten Sprachinformationen werden über eine Multiplexeinrichtung MUX dem z.B. digitalen Koppelnetz KN zugeführt.

Die Teilnehmeranschlußeinheit SLMD ist für den Anschluß von digitalen Kommunikationsendgeräten FD vorgesehen und stellt das Bindeglied zwischen ISDN-Kommunikationsendgerät und dem Kommunikationssystem KS dar. Eine Anschlußeinheit SLMD ist für den Anschluß einer bestimmten Anzahl von digitalen Kommunikationsendgeräten vorhanden. Die Nachrichtenübertragung erfolgt hierbei z.B. über Nachrichtenkanäle und die Signalisierung wird über einen zusätzlichen Kanal übermittelt. Die vom Kommunikationsendgerät FD gelieferten digitalen Sprachinformationen werden ebenfalls über die Multiplexeinrichtung MUX zum Koppelnetz KN weitergegeben.

Der Zugriff zu einer Amtsleitung AL, über die - gegebenenfalls als eine von mehreren - das Kommunikationssystem KS beispielsweise mit dem öffentlichen Netz ÖN verbunden ist, erfolgt über die Schnittstelle LS. Diese Schnittstelle beinhaltet beispielsweise einen ISDN-Teil, der z.B. als standardisierte S0-Schnittstelle ausgebildet sein kann. Die Peripherie des Kommunikationssystems KS wird ergänzt durch eine Signalisierungseinheit SE, die unter anderem zur Zeichenversorgung des Kommunikationssystems vorhanden ist.

Vermittlungstechnisch gesteuert werden die Leitungsanschlußeinrichtungen LT von der Systemsteuerung ST. Hierbei ist jede Leitungsanschlußeinrichtung über einen Signalisierungskanal SK mit der Anlagensteuerung verbunden. Über diesen Signalisierungskanal SK werden die Informationen mit Hilfe der bekannten HDLC-Übermittlungsprozedur ausgetauscht. Die in der Systemsteuerung ST generierten Taktsignale werden über eine Taktleitung TL an die Leitungsanschlußeinrichtungen LT verteilt. Das zur Verfügungstellen der Taktsignale wird durch die Einheit TG symbolisiert. Der Signalisierungskanal SK und die Taktleitung TL ist Teil eines Systembusses SB.

Der Prozessor CPU der Systemsteuerung ST hat Zugriff zu den in der Speichereinrichtung SPE abgelegten Informationen. Der Speicher enthält eine Datenbasis DB in der im Speicherteil KD die Kundendaten abgelegt sind. Diese betreffen beispielsweise die den einzelnen Endgeräten FA bzw. FD zugeteilten Berechtigungen ebenso wie die den Mobilendgeräten ME1...MEn zugeteilten Berechtigungen und die Anlagenkonfiguration AK. Die Datenbasis enthält das Betriebssystem BS, das die für das Kommunikationssystem KS typische Vielzahl von quasi gleichzeitig anfallenden und auch zu erledigenden Einzelaufgaben koordiniert. Seine wesentliche Aufgabe besteht darin, in Abhängigkeit von eingetroffenen oder in der Systemsteuerung intern gebildeten Anreize dem Prozessor CPU, der die eigentliche ausführende Einheit der Systemsteuerung ist, Verarbeitungsvorschriften zuzuweisen. Diese beinhalten eine Reaktion auf die betreffenden Anreize. Für jeden möglichen Anreiz steht deshalb in der Systemsteuerung eine anreizindividuelle Verarbeitungsvorschrift zur Verfügung, die als jeweiliges Programmodul im Systemspeicher SPE hinterlegt ist. Neben den von den angeschlossenen Endgeräten übermittelten Anreizen werden auch in den verschiedenen vermittlungstechnischen Einheiten, wie z.B. in den Leitungsanschlußeinheiten LT, im Koppelnetz KN, usw., also innerhalb des Kommunikationssystems, Anreize erzeugt.

Daten, die während eines durch ein Kommunikationsendgerät initiierten Verbindungsaufbaus aus der Datenbasis abgefragt werden, können zumindest teilweise in den Arbeitsspeicher AS übernommen werden. Dieser Arbeitsspeicher dient unter anderem der Aufnahme von temporären Daten zur Programmablaufsteuerung.

Grundsätzlich weist die in der FIG angedeutete Basisstruktur der Steuerung eines digitalen Nebenstellen-Kommunikationssystems KS einen modularen Charakter auf und es sind zumindest zwei hierarchische Ebenen der Programmsteuerung vorhanden. Eine von ihnen dient mittels jeweils an eine bestimmte Endgeräteart angepaßten Leitungsprogrammodulen DH zur Steuerung peripherer Geräte. Jedes dieser Programmodule DH bietet eine systemeinheitliche Schnittstelle zur Vermittlungstechnik-Strukturebene, die im vorliegenden Fall durch ein Vermittlungsprozedur-Programmodul CP repräsentiert ist. In der Leitungstechnik-Strukturebene sind den einzelnen Endgerätearten zugeordnete Programmodule DTE für digitale Endgeräte und ATE für analoge Endgeräte im Programmodule DH angedeutet. Des weiteren ist ein Programmodul DH-F dargestellt, in dem die im Zusammenhang mit den Mobilendgeräten ME1...MEn stehenden Anreize aufgenommen und in bestimmter Weise behandelt werden. Der Informationsaustausch zwischen der Leitungstechnik-Strukturebene und der Vermittlungstechnik-Strukturebene erfolgt mittels definierter Meldungen, die beispielsweise über eine strichliert angedeutete Software-Busstruktur S übertragen werden. Diese kann als integraler Bestandteil des Betriebssystems BS angesehen werden. Die Programmodule der beiden genannten Steuerungsebenen haben mittels Datenbasis-Zugriffsroutinen Zugang zur Datenbasis DB des Kommunikationssystems. Das Vorhandensein derartiger Zugriffsroutinen ist durch den strichliert dargestellten Block ZR angedeutet.

Die Aufgaben des Vermittlungsprozedur-Programmoduls CP umfassen beispielsweise die für die Steuerung des Verbindungsaufbaus und des Verbindungsabbaus notwendigen Teilprozesse der gesamten Vermittlungsprozedur. So werden z.B. Berechtigungen geprüft und Wahlbewertungsprozeduren durchgeführt. Es erfolgt auch eine Signalisierung von vermittlungstechnischen Zuständen zwischen den Kommunikationsendgeräten und es ist ein Aktivieren und ein Deaktivieren von Vermittlungstechnik-Leistungsmerkmalen aus den unterschiedlichen vermittlungstechnischen Zuständen heraus durchführbar. Stellvertretend für die im Nebenstellen-Kommunikationssystem KS insgesamt vorgesehenen Leistungsmerkmal-Programmodulen ist das Modul LM gezeigt.

Um für eine bestimmte Anzahl von Nebenstellenteilnehmern die telefonischen Verbindungsmöglichkeiten zu erhöhen und eine Erreichbarkeit auch dann sicherzustellen, wenn sie nicht am Arbeitsplatz sind, können Mobilendgeräte ME1...MEn eingesetzt werden. Jedes dieser Mobilendgeräte ist jeweils auf drahtlosem Wege über mindestens eine Funk-Servereinheit FS erreichbar. Jede dieser Funk-Servereinheiten ist für den Aufbau und die Durchführung von Gesprächsverbindungen zuständig. Es können beispielsweise mindestens zwei Funk-Servereinheiten derart benachbart angeordnet sein, daß sie den gleichen Funkbereich abdecken und somit für die Teilnehmer des in dem Nebenstellen-Kommunikationssystem KS integrierten drahtlosen Übertragungssystems eine erhöhte Erreichbarkeit besteht. Diese Funk-Servereinheiten können auch örtlich getrennt voneinander plaziert sein, so daß die Funkreichweite insgesamt vergrößert wird. Sinnvollerweise sieht man dann eine Überlappung der einzelnen Funkbereiche vor. In der jeweils angeschlossenen Funk-Servereinheit FS werden die für die Kommunikation mit den Mobilendgeräten ME erforderlichen Prozeduren und Protokolle abgewickelt. Für einen gewünschten Verbindungsaufbau zu einem Mobilendgerät ME wird eine freie Funk-Servereinheit entsprechend aktiviert. Dem Übertragungssystem stehen für die Funkverbindungen eine bestimmte Anzahl von Kanalpaaren zur Verfügung. Für eine Verbindungsherstellung tastet jede Funkvermittlungseinheit und jedes Mobilendgerät diese Kanalpaare zyklisch ab. Eine bestimmte Anzahl von störungsfreien Kanälen werden als "Vorzugskanäle" laufend auf einen Belegungswunsch hin abgefragt. Diese Vorzugskanaltabelle wird während des Betriebes auf ihre Richtigkeit geprüft und eventuell aktualisiert. Durch die implementierten Suchalgorithmen wird sichergestellt, daß für das von mehreren Funk-Servereinheiten gesuchte Mobilendgerät die beste Gesprächsgüte vermittels derjenigen Funk-Servereinheit erreicht wird, die sich als erste meldet. Dieses Melden erfolgt durch das Aussenden eines vorgegebenen Meldekriteriums. Ein Suchvorgang nach einem Mobilendgerät wird nach einer vorgegebenen Anzahl von Versuchen, die jeweils eine bestimmte Suchzeit beinhalten, abgebrochen. Eine solche erfolglose Suche infolge der nicht mehr vorhandenen Erreichbarkeit ergibt sich beispielsweise immer dann, wenn das betreffende Mobilendgerät außerhalb des räumlichen Erreichbarkeitsbereiches ist oder wenn beispielsweise über die in ihm vorhandenen Batterien die Stromversorgung nicht mehr sichergestellt werden kann. Es könnte auch z.B. zur Einsparung von Batterie-Leistung, der Betriebsschalter in Ausstellung gebracht worden sein.

Führt der zu einem Mobilendgerät (Funktelefon) gerichtete Anruf nicht zu einer Verbindung, so kann dies gegebenenfalls unter Hinweis auf die Ursache hierfür dem anrufenden Teilnehmer per Display-Information mitgeteilt werden. Es wird erfindungsgemäß abgespeichert, welche vermittlungstechnisch relevanten Handlungen der rufende Teilnehmer statt dessen ausgeführt hat. Die Abspeicherung der diesbezüglichen Informationen kann im Systemspeicher des Kommunikationssystems beispielsweise in einem den Mobilendgeräten zugeordneten Speicherbereich MS des Arbeitsspeichers oder auch in dem mobilendgerätebezogenen Modul DH-F erfolgen. Es kann auch vorgesehen sein, daß diese Informationen in der zuständigen Funk-Servereinheit FS abgespeichert werden.

Für das Ausführungsbeispiel wird angenommen, daß die im Nichterreichbarkeitszustand bei einem Anruf abgeleiteten Informationen im Arbeitsspeicher AS der Systemspeicherung abgespeichert werden. Als ISDN-Merkmal wird bei einem eingehenden Anruf eines externen Teilnehmers dieser identifiziert. Es kann also die Rufnummer dieses Teilnehmers und gegebenenfalls auch der Name abgespeichert werden. Dies erfolgt beispielsweise als die entsprechende Information I1 in dem jedem Mobilendgerät individuell zugeordneten Speicherbereich SME des Speicherbereiches MS. Beansprucht der vergeblich rufende Teilnehmer ein Sprachspeichersystem VM (Voice Mail) das die Aufzeichnung und Weitergabe gesprochener Informationen ermöglicht, so wird diese Tatsache beispielsweise als Information I2 eingespeichert. Weiterhin ist es denkbar, daß als weitere Informationen Hinweise auf kurze vom betreffenden Teilnehmer eingegebenen Botschaften eingespeichert sind. Dies könnten vorbestimmte Botschaften oder aktuell eingegebene Botschaften sein. Eine Speicherinformation I3, könnte beispielsweise beinhalten, daß ein Rückruf zu einer bestimmten Zeit erfolgen soll. Diese Botschaften sind an geeigneter Stelle gespeichert und z.B. als digitale Information vorhanden, die nach der späteren Übermittlung an das betreffende Mobilendgerät am Display anzeigbar ist.

Durch die Funk-Servereinheit, die gegebenenfalls als eine von mehreren Funk-Servereinheiten, die ein Zellularsystem bilden vorhanden ist, werden ständig Informationssteuersignale ausgesendet, die das Mobilendgerät mit dem Wiederherstellen seiner Erreichbarkeit durch eine entsprechende und auf diese Erreichbarkeit hinweisende Signalisierung beantwortet. Diese erneute Erreichbarkeit ist beispielsweise mit dem Wiedereintritt in den jeweiligen Funkbereich oder mit dem erneuten Umschalten des Mobilendgerätes in den betriebsbereiten Zustand gegeben. Aufgrund einer ausgesendeten individuellen Kennung des Mobilendgerätes wird in der Funk-Servereinheit eine Identifizierung und eine entsprechende Berechtigungsprüfung vorgenommen. Es kann also nur ein im System gemeldetes Mobilendgerät über die Funkstrecke eine Kommunikation betreiben.

Um die Batterie des Mobilendgerätes nicht zusätzlich zu belasten, kann von einem permanenten wechselseitigen Informationsaustausch zwischen der Funk-Servereinheit und dem Mobilendgerät abgesehen werden. Da die Funk-Servereinheit ständig Informationssteuersignale aussendet, besteht für das Mobilendgerät die Möglichkeit, beim Einschalten oder beim Eintritt in den Empfangsbereich der Funk-Servereinheit einmal zur Dokumentation des funktionsbereiten Zustandes eine entsprechende Information auszusenden. Diese Signalisierung der Anrufbereitschaft erfolgt demnach jedesmal zu Beginn der jeweiligen Erreichbarkeit. Ist eine Mehrzahl von Funk-Servereinheiten vorgesehen, so kann grundsätzlich zur Unterstützung einer aktiven Teilnehmerverwaltung durch das Kommunikationsssystem die individuelle Kennung der einzelnen Mobilendgeräte mit den jeweiligen Funk-Servereinheiten unabhängig von einem Gesprächszustand auch ständig ausgetauscht werden.

Es wird zumindest jedesmal mit der Herstellung der Erreichbarkeit ein entsprechendes positives Erreichbarkeitssignal zur Funk-Servereinheit gesendet. Aufgrund dieses Signals werden dann die zwischenzeitlich gespeicherten Informationen I1...In aus den entsprechenden Speicherbereichen ausgelesen und durch die Funk-Servereinheit zum betreffenden Mobilendgerät übertragen. Es werden also die in den mobilendgeräteindividuellen Speicherbereichen SME1...SMEn enthaltenen Informationen I dem Teilnehmer zur Kenntnis gebracht. Dies kann in unterschiedlicher Weise erfolgen. Die Information, daß im Sprachspeichersystem eine Nachricht hinterlegt ist kann beispielsweise durch die Aktivierung einer Leuchtanzeige signalisiert werden (Message waiting lamp). Eine Rückrufaufforderung oder die abgespeicherten kurzen Botschaften können am Display des betreffenden Mobilendgerätes dargestellt werden. Der Teilnehmer wird also mit den neuesten Statusmeldungen versorgt.

## Patentansprüche

1. Verfahren zur Steuerung der Betriebsweise von Mobilendgeräten (ME1 bis MEn) die zum Teilnehmerfeld eines an ein programmgesteuertes Kommunikationssystem (KS) angeschlossenen und durch eine Funk-Servereinheit (FS) realisierten drahtlosen Übertragungssystem gehören, wobei das Kommunikationssystem ein die Vermittlung, Signalisierung und die Leistungsmerkmale steuerndes Mikroprozessorsystem aufweist, das durch einen es repräsentierenden Mikroprozessor (CPU) und durch unter anderem anschluß- und gerätebezogene Informationen speichernden Speichereinheiten (SPE) gebildet ist,
**dadurch gekennzeichnet,**
**daß** im Zustand der bei der Anforderung des Mobilendgerätes (ME1) bestehenden oder sich während einer Gesprächsverbindung einstellenden Nichterreichbarkeit eine Information über die Identität des ursprünglich rufenden Teilnehmers und/oder über seine von ihm jeweils vollzogenen, über den Verbindungsversuch hinaus weiter wirkenden bzw. gesprächsübergreifende vermittlungstechnischen Eingaben als Statusmeldungen (I...In) abgespeichert werden, daß aufgrund der vom Mobilendgerät (ME1) bei seiner wiederhergestellten Erreichbarkeit ausgesendeten und anlagenseitig ausgewerteten Signalinformation durch die Funk-Servereinheit (FS) die abgespeicherten Statusmeldungen (I1 bis In) zu dem Mobilendgerät (ME1) übermittelt und für den betreffenden Teilnehmer sinnlich wahrnehmbar zur Kenntnis gebracht werden.

2. Verfahren nach Anspruch 1,
**dadurch gekennzeichnet,**
**daß** die Übermittlung der abgespeicherten Statusmeldungen (I1 bis In) zum nächstgeeigneten Zeitpunkt vollautomatisch erfolgt oder durch eine Prozedur des Teilnehmers veranlaßt wird.

3. Verfahren nach Anspruch 1 oder 2,
**dadurch gekennzeichnet,**
**daß** die im Zeitraum der Nichterreichbarkeit abgespeicherten Statusmeldungen dem Teilnehmer des betreffenden Mobilendgerätes ME1 durch die Darstellung auf einer zur visuellen Anzeige geeigneten Anzeigeeinrichtung DL zur Kenntnis gebracht werden.

4. Verfahren nach Anspruch 3,
**dadurch gekennzeichnet,**
**daß** im Zusammenhang mit der automatisch erfolgenden Anzeige der Statusmeldungen die Abgabe eines vorzugsweise akkustischen Aufmerksamkeitszeichens veranlaßt wird.

5. Verfahren nach Anspruch 2,
**dadurch gekennzeichnet,**
**daß** die automatische Übermittlung der abgespeicherten Statusmeldungen auch unabhängig von einer vorab erfolgten vermittlungstechnischen Inanspruchnahme des Mobilendgerätes vorgenommen wird.

6. Verfahren nach einem der vorhergehenden Ansprüche,
**dadurch gekennzeichnet,**
**daß** die Auswertung der Signalinformation über die hergestellte Erreichbarkeit sowie die Speicherung der Statusmeldungen und die Übertragung der zwischenzeitlich gespeicherten Statusmeldungen zu dem betreffenden Mobilendgerät durch eine mit der Systemsteuerung des Kommunikationssystem auf drahtgebundenen Wege kommunizierende Funk-Servereinheit FS veranlaßt bzw. vorbereitet wird.

## Claims

1. Method for controlling the method of operation of mobile terminals (ME1 to MEn) which belong to the subscriber area of a wire-free transmission system which is connected to a programmable communication system (KS) and is in the form of a radio server (FS), with the communications system having a microprocessor system which controls the switching, the signalling and the service features and is formed by a microprocessor (CPU), which represents it, and by memory units (SPE) which, inter alia, store connection-related and device-related information,
**characterized**
**in that**, in the state of nonaccessibility which exists at the request of the mobile terminal (ME1) and occurs during a call connection, information about the identity of the originally calling subscriber and/or about his switching input which are in each case carried out by him and go beyond the connection attempt or beyond the call is stored as status messages (I...In), in that, on the basis of the signal information which is transmitted by the mobile terminal (ME1) when its accessibility is re-established and which is evaluated at the system end, the radio server unit (FS) transmits the stored status messages (I1 to In) to the mobile terminal (ME1) and the relevant subscriber is made aware of these status messages (I1 to In) such that their sense can be perceived.

2. Method according to Claim 1,
**characterized**
**in that** the stored status messages (I1 to In) are transmitted fully automatically at the next suitable time, or this is caused to be done by a subscriber procedure.

3. Method according to Claim 1 or 2,
**characterized**
**in that** the subscriber with the relevant mobile terminal (ME1) is notified of the status messages which have been stored in the time period of nonaccessibility by means of a display on a display device (DL) which is suitable for visual display.

4. Method according to Claim 3,
**characterized**
**in that** a preferably audible attention signal is output in conjunction with the automatic display of status messages.

5. Method according to Claim 2,
**characterized**
**in that** the automatic transmission of the stored status messages also takes place independently of any previous switching use of the mobile terminal.

6. Method according to one of the preceding claims,
**characterized**
**in that** the evaluation of the signal information about the accessibility that has been produced as well as the storage of status messages and the transmission of the status messages which have been stored in the mean time to the relevant mobile terminal are initiated and/or prepared by a radio server unit FS which communicates by wire-based roots with the system controller of the communication system.

## Revendications

1. Procédé pour la commande du mode de fonctionnement de terminaux mobiles (ME1 à MEn) qui sont raccordés au domaine d'abonnés d'un système de communication (KS) à commande programmée et qui appartiennent à un système de transmission sans fil réalisé par une unité de serveur radio (FS), le système de communication présentant un système de microprocesseur qui commande la communication, la signalisation et les caractéristiques de service et qui est formé par un microprocesseur (CPU) qui le représente et par des unités de mémoire (SPE) qui conservent entre autres des informations concernant les raccordements et les appareils,
**caractérisé en ce que**
dans une situation de non-accessibilité qui se présente lors d'un appel du terminal mobile (ME1) ou qui s'établit pendant une liaison vocale, une information qui concerne l'identité de l'abonné qui a appelé initialement et/ou des données techniques de communication qu'il a introduites, qui agissent sur la tentative de liaison ou qui se superposent à la conversation, sont conservées en mémoire sous la forme de messages d'état (I ... In), **en ce que** les messages d'état (I1 à In) conservés en mémoire sont transmis au terminal mobile (ME1) lorsqu'une information de signalisation est envoyée par le terminal mobile (NE1) lorsque son accessibilité s'est rétablie et est évaluée par l'unité de serveur radio (FS) de l'installation et sont présentées à l'abonné concerné d'une manière qu'il peut détecter.

2. Procédé selon la revendication 1, **caractérisé en ce que** la transmission des messages d'état (I1 à In) conservés en mémoire s'effectue de manière entièrement automatique à l'instant le plus approprié ou est lancée par une procédure exécutée par l'abonné.

3. Procédé selon la revendication 1 ou 2, **caractérisé en ce que** les messages d'état conservés en mémoire pendant le laps de temps où l'abonné du terminal mobile ME1 concerné ne peut être atteint sont mis en évidence par la présentation d'un affichage visuel sur un dispositif d'affichage DL approprié.

4. Procédé selon la revendication 3, **caractérisé en ce que** l'émission d'un signal de préférence acoustique est lancée en association à l'affichage automatique des messages d'état.

5. Procédé selon la revendication 2, **caractérisé en ce que** la transmission automatique des messages d'état conservés en mémoire est réalisée également de manière indépendante d'une sollicitation technique de communication du terminal mobile qui s'est effectuée précédemment.

6. Procédé selon l'une des revendications précédentes, **caractérisé en ce que** l'évaluation des informations de signalisation au sujet de la « joignabilité » établie ainsi que la mise en mémoire des messages d'état et que la transmission des messages d'état conservés en mémoire temporairement au terminal mobile concerné est lancée ou préparée par une unité de serveur radio FS qui communique avec la commande du système de communication par un parcours filaire.
